(19) Europäisches Patentamt

European Patent Office

Office européen des brevets

(11) Veröffentlichungsnummer: **0 505 772 A2**

# (12) EUROPÄISCHE PATENTANMELDUNG

(21) Anmeldenummer: **92103633.1**

(22) Anmeldetag: **03.03.92**

(51) Int. Cl.5: **C13D 3/00**

(30) Priorität: **23.03.91 DE 4109661**

(43) Veröffentlichungstag der Anmeldung:
**30.09.92 Patentblatt 92/40**

(84) Benannte Vertragsstaaten:
**AT BE DE DK FR GB IT**

(71) Anmelder: **Fette, Dietrich**
**Max-Planck-Strasse 89**
**W-4902 Bad Salzuflen(DE)**

(72) Erfinder: **Friedemann, Ingwalt, Dr.**
**Gottfried-Keller-Strasse 44**
**O-4050 Halle/Saale(DE)**

(74) Vertreter: **Depmeyer, Lothar**
**Auf der Höchte 30**
**W-3008 Garbsen 1(DE)**

(54) **Verfahren zur Gewinnung von Zucker aus Zuckerrüben.**

(57) Die Erfindung geht aus von einem Verfahren zur Gewinnung von Zucker aus Zuckerrüben mit Ansäuerung von Extraktionswasser und Sulfitation von Dünnsaft unter Nutzung von bei der Gewinnung anfallendem Rauchgas aus schwefelhaltigen Brennstoffen und ammoniakhaltigem Kondensat aus Erwärmungs- und/oder Verdampfungsmassnahmen bei dieser Gewinnung. Um bei einem derartigen Verfahren die Ansäuerung und die Sulfitation in einem Prozess durchführen und den Wärmehaushalt verbessern zu können, wird aufgrund der Erfindung das $SO_2$-haltige Rauchgas mit dem ammoniakhaltigen Kondensat in Direktkontakt gebracht, das entstehende saure Kondensat durch indirekte Beheizung von Rauchgasen erwärmt, das durch die Erwärmung aus dem sauren Kondensat desorbierende Schwefeldioxid mit dem zu sulfitierenden Dünnsaft in Direktkontakt gebracht und ferner wird das zurückbleibende saure Kondensat zur Ansäuerung des Extraktionswassers benutzt.

EP 0 505 772 A2

Die Erfindung bezieht sich auf ein Verfahren zur Gewinnung von Zucker aus Zuckerrüben mit Ansäuerung von Extraktionswasser und Sulfitation von Dünnsaft unter Nutzung von bei der Gewinnung anfallendem Rauchgas aus schwefelhaltigem Brennstoff und ammoniakhaltigem Kondensat aus Erwärmungs- und/oder Verdampfungsmassnahmen bei dieser Gewinnung.

Nach bekannten Vorschlägen werden für die Ansäuerung des Extraktionswassers einerseits und die Sulfitation des Dünnsaftes andererseits getrennte Prozesse angewendet. Dies hat den Nachteil, dass bei der Bereitstellung des $SO_2$ mit einem Schwefelofen ein erheblicher apparativer Aufwand und bei der Bereitstellung des flüssigen $SO_2$ erhebliche Kosten entstehen. Es können weder Energieeinsparungen vorgenommen noch Umweltbelastungen verringert werden.

Unter Vermeidung dieser Nachteile liegt der Erfindung die Aufgabe zugrunde, ein Verfahren der eingangs erwähnten Art vorzuschlagen, mit der die obige Ansäuerung und Sulfitation in einem Prozess vollzogen und zudem der Wärmehaushalt der Zuckergewinnung wesentlich verbessert werden kann.

Diese Aufgabe wird durch die im Kennzeichnungsteil des Patentanspruchs 1 aufgeführten Merkmale gelöst. Weitere vorteilhafte Ausgestaltungen ergeben sich aus den Unteransprüchen.

Hierbei ist es zweckmässig, wenn der anfallende Rauchgasstrom zunächst in einem Desorptions- und Verdunstungsprozess von der Temperatur am Fuchs , die bei etwa 1oo - 2oo° C liegt, um etwa 2 - 8 K abgekühlt und dann einem Gegenstromwärmeübertrager zugeführt wird, um einen Grossteil seiner sensiblen Wärme an ein Kühlmittel abzugeben. Als Kühlmittel dient dabei ein im Kreislauf geführter Wärmeträger, vorzugsweise enthärtetes Wasser, das zur Erhöhung der Siedetemperatur mit einer geeigneten Substanz versetzt wird.Die Austrittstemperatur des Wärmeträgers ist damit auf höher als 11o° C einstellbar. Die Nutzwärme soll dann einem Wärmeverbraucher innerhalb des Zuckergewinnung zugeführt werden. Um eine hohe Abkühlung der Rauchgase zu erreichen, soll die Eingangstemperatur des Wärmeträgers möglichst gering sein, z.B. zwischen 65 - 8o° C liegen.Damit werden Austrittstemperaturen des Rauchgases zwischen 75 und 9o° C erreicht.

Der nächste Verfahrensschritt ( Absorption und Kondensation) beinhaltet einen Direktkontakt des abgekühlten Rauchgases mit im Kreislauf geführtem, zuvor auf etwa 3o - 55° C abgekühltem Kondensat, wobei $SO_2$ aus dem Rauchgas in das Kondensat absorbiert wird und Wasserdampf infolge des verringerten Sättigungswassergehaltes bei der Endtemperatur des Prozesses aus dem Rauchgas in das Kondensat austaut. Der Entfeuchtungsgrad des Rauchgases ist dabei umso höher, je niedriger die Temperatur und je höher die Menge des eintretenden Kondensats ist. Vorzugsweise soll dabei die Eintrittstemperatur des Kondensats in den Prozess etwa 15 K unterhalb der Tautemperatur des Wasserdampfes gewählt werden.Die Austrittstemperatur des Kondensats und des Rauchgasstromes nach dem Kontakt sollen zwischen der Eintrittstemperatur des Kondensats und der Tautemperatur des Wasserdampfes, d.h. zwischen etwa 3o - 7o° C liegen. Die $SO_2$-Konzentration im Kondensat liegt weit unter Sättigungskonzentration, so dass eine ausreichende Triebkraft für den Stoffübergang gegeben ist. Bei der Abkühlung des im Kreislauf geführten Kondensats in einem zweiten Gegenstromwärmeübertrager fällt eine zweite Nutzwärmemenge auf niedrigerem Niveau an.

Als Kühlmittel soll dabei vorzugsweise Trink- oder Brauchwasser mit Eintrittstemperaturen von etwa 5 - 15° C verwendet werden, das sich in Abhängigkeit vom Wasserdampfgehalt im Rauchgas auf Temperaturen von etwa 4o - 65° c erwärmt und so als Gebrauchswasser benutzt werden kann.

Die bei dem beschriebenen Kontaktprozess vom Kondensat zu absorbierende $SO_2$-Menge entspricht in etwa der Summe der für die Ansäuerung des Extraktionswassers und die Sulfitation des Dünnsaftes erforderlichen Schwefeldioxids. Dabei ist zu berücksichtigen, dass etwa 4o - 6o % der darin enthaltenen $SO_2$-Menge absorbiert werden.

Von dem im Kreislauf geführten Kondensat wird ein Teilstrom abgezweigt und dem Desorptions- und Verdunstungsprozess zugeführt; in diesem wird der abgezweigte Kondensatteilstrom indirekt mit dem Rauchgasstrom auf etwa 9O - 98° C erwärmt, wodurch die $SO_2$-Sättigungskonzentration unter die im Kondensatteilstrom vorliegende $SO_2$-Konzentration absinkt und infolgedessen soviel $SO_s$ in die Gasphase desorbiert wird, dass die $SO_2$-Konzentration im Kondensatteilstrom gleich der neuen Sättigungskonzentration wird. Gleichzeitig tritt durch Verdunstung so viel Wasserdampf in die Gasphase über, dass das desorbierte $SO_2$ mit Wasserdampf nahezu gesättigt wird. Das so gebildete $SO_2$-Wasserdampf-Gemisch ist in direktem Kontakt mit Dünnsaft zu bringen, wobei eine Absorption des $SO_2$ und ein Austauen von Wasserdampf in die Lösung erfolgt, sofern die Dünnsafttemperatur unterhalb der Temperatur des $SO_2$-Wasserdampf-Gemisches liegt.

Der Abzug eines Kondensatteilstromes aus dem Absorptions- und Kondensationsprozess erfordert die Zugabe von ammoniakhaltigem Kondensat zum im Kreislauf geführten Kondensat. Die Menge des zugegebenen Kondensats wird in Abhängigkeit vom Entfeuchtungsgrad des Rauchgasstromes und dem technologischen $SO_2$-Bedarf für Ansäuerung und Sulfitation bestimmt. Durch Erhöhung der zugegebenen Kondensatmenge wird die Aufteilung

des $SO_2$ im Desorptions-/Verdunstungsprozess auf Flüssig- und Gasphase in Richtung Flüssigphase gelenkt und durch die Absenkung der zugegebenen Kondensatmenge die Menge an desorbiertem $SO_2$ erhöht. Dieser Effektist ein wesentlicher Aspekt des erfindungsgemässen Verfahrens. Er beruht darauf, dass durch die differenzierte Zugabe von ammoniakhaltigem Kondensat bestimmt wird, wie weit die $SO_2$-Konzentration im ausgekreisten Kondensatteilstrom von der Sättigungskonzentration bei der Absorptionstemperatur entfernt ist. Bei einer höheren Annäherung an diese Sättigungskonzentration wächst bei der Desorption der Anteil des desorbierten und für die Sulfitation zu Verfügung stehenden $SO_2$, da der Anteil $SO_2$, der nach der Desorption im Kondensatteilstrom verbleibt, ausschliesslich von der Desorptionstemperatur abhängt und etwa gleich der vorliegenden Sättigungskonzentration ist.

Das aus dem Prozess abgezogene, mit $SO_2$ gesättigte, stark saure Kondensat wird zum Ansäuern des Extraktionswassers eingesetzt. Zudem kann durch geregelte Zugabe von wässriger Calciumhydroxidlösung der gewünschte pH-Wert des Extraktionswassers von 5,5 - 5,8 eingestellt werden.

Das erfindungsgemässe Verfahren soll vorzugsweise angewendet werden bei Rauchgasen mit einem $SO_2$-Gehalt von mehr als o,oo25 $kg/m^3$ i.N. und einem Wasserdampfgehalt von mehr als o,o5 kg Wasser/kg Gas und einem $SO_2$-Bedarf für die Sulfitation von o,o1 - o,o2 kg/dt Rüben sowie einem $SO_2$-Bedarf für die Ansäuerung von o,o1 - o,o3 kg/dt Rüben. Im Falle geringerer $SO_2$-Gehalte als o,oo25 $kg/m^3$ i.N. ist das Verfahren noch anwendbar, jedoch steigen bei der Realisierung die Kosten.

Unter besonderen Voraussetzungen kann auf den zur Kühlung des Rauchgasstromes eingesetzten Gegenstromwärmeübertrager verzichtet werden. Die dann zu Eintrittstemperaturen des Rauchgases in den Absorptions- und Kondensationsprozess von etwa 17o - 19o° C führenden Temperaturen haben eine Erhöhung der Nutzwärmemenge auf niedrigerem Niveau zur Folge. Diese Verfahrensführung ist dann besonders von Vorteil, wenn kein zusätzlicher Wärmebedarf auf höherem Niveau besteht und der Bedarf an Gebrauchswarmwasser hoch ist.

Weiterhin kann ggfs. auch auf den Gegenstromwärmeübertrager zur Kühlung des zur Absorption des $SO_2$ im Kreislauf geführten Kondensatstromes verzichtet werden. Hierbei stellt sich eine Absorptionsendtemperatur ein, die oberhalb der Tautempereatur des im Rauchgas enthaltenen Wasserdampfes liegt. Dadurch kommt es nicht zum Austauen, sondern zum Verdunsten des Wasserdampfes. Die erforderliche Verdunstungswärme stammt dabei aus der bei der Abkühlung des Rauchgases von der Austrittstemperatur aus dem Gegenstromwärmeübertrager auf die Absorptionsendtemperatur gewonnenen sensiblen Wärme. Diese Verfahrensführung erweist sich als zweckmässig, wenn kein Wärmebedarf auf niedrigem Temperaturniveau besteht.

Da die Absorption des $SO_2$ und die Verdunstung des Wassers in entgegengesetzter Richtung ablaufen, ist der Direktkontakt unter intensiver Durchmischung von Gas und Flüssigkeit zu vollziehen.

Es ist ferner möglich, das auf die beschriebene Weise gewonnene $SO_2$-Wasserdampf-Gemisch ausser zur Sulfitation von Dünnsaft auch zur $SO_2$-Behandlung von anderen Medien, z.B. Dicksaft oder Lösegut zu nutzen, Weiterhin kann auch das aus dem Desorptions-/Verdunstungsprozess abgezogene, stark saure Kondensat ausser zur Ansäuerung von ammoniakhaltigem Kondensat auch zur Ansäuerung anderer Medien z.B. von Presswasser eingesetzt werden.

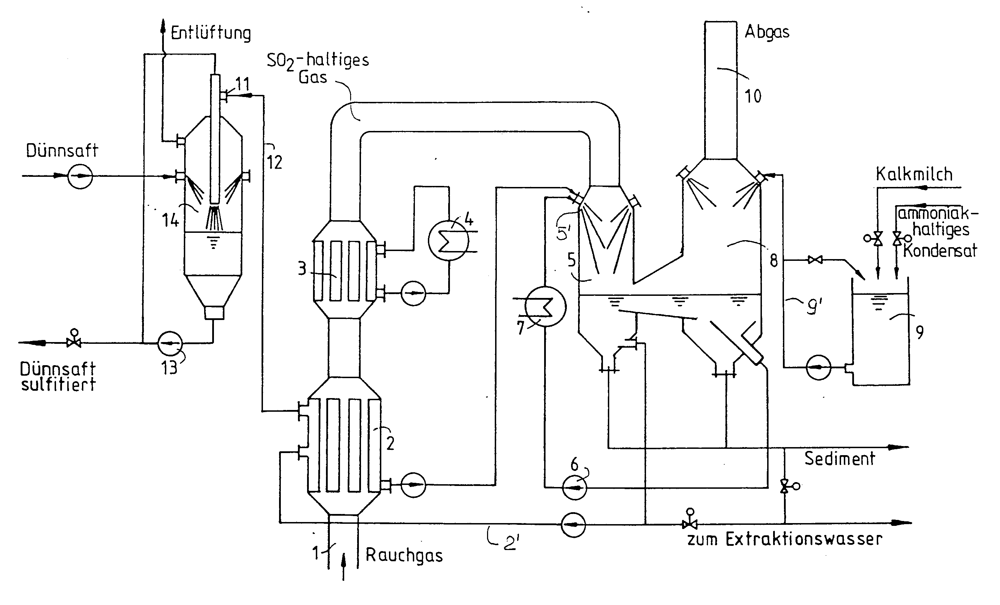

Weitere Einzelheiten der Erfindung werden anhand der Zeichnung erläutert, in der eine Zuckergewinnung aus Zuckerrüben schematisch mittels Fliesschema wiedergegeben ist.

In der Zuckerfabrik gemäss Schema mit einer Verarbeitungsleistung von 13.ooo t Rüben/d erfolgt die Beheizung der der Fabrik zugeordneten Dampferzeugungsanlage mit einer schwefelhaltigen Kohle. Für die Erzeugung von 249 t Dampf/h werden 84 t/h Kohle verheizt. Die feuchte Rauchgasmenge von 478.6oo $m^3$ i.N./h bzw. 617,4 t/h verlässt die Dampferzeugungsanlage mit einem $SO_2$-Gehalt von o,oo38 Kg $SO_2/m^3$ i.N. entsprechend 1819 kg $SO_2$/h, einem Wassergehalt von o,15 kg $H_2O$/kg trockenes Gas mit einer Wasserdampf-Tautemperatur von 59° C und mit einer Temperatur von 18o° C durch den Rauchgaskanal 1. Über diesen Kanal gelangt das Rauchgas zu einem Desorber 2 für $SO_2$ und kühlt sich dort um etwa 5 K ab, während es die Heizrohre passiert.

Der Rauchgasstrom gelangt nun zu einem Wärmeübertrager 3. Dort kühlt sich das Rauchgas im Gegenstrom zu einem Wärmeträger auf etwa 8o° C ab. Zugleich erwärmt sich der Wärmeträger auf etwa 11o° C und gibt seine Nutzwärme in einem Gegenstromwärmeübertrager 4 an einen im technologischen Prozess der Zuckergewinnung zu erwärmenden Stoffstrom ab.

Der Rauchgasstrom wird nunmehr einem Strahlwäscher 5 zugeleitet, dem ein Kondensatkreislauf ( etwa 900 $m^3$/h ) zugeordnet ist. Das Kondensat wird mittels Pumpe 6 gefördert und im Wärmeübertrager 7 auf etwa 45° C abgekühlt. Durch die im Strahlwäscher 5 oben befindlichen, nach unten gerichteten Strahler 5' wird das Rauchgas angesaugt.

Das so entstehende Flüssigkeits-Gas-Gemisch gelangt dann in den Sprühwäscher 8, in dem sich die Phasen wieder trennen. Durch den intensiven Kontakt zwischen dem Rauchgas und dem Kondensat erfolgt die Absorption von etwa 2oo kg $SO_2$/h und eine Kondensation von Wasser aus dem Rauchgas in das Kondensat. Ein Teilstrom des im Strahlwäscher 5 befindlichen Kondensats mit hohem $SO_2$-Gehalt wird abgezogen und gelangt in den Desorber 2.

Die Zugabe von ammoniakhaltigem Kondensat erfolgt geregelt in einen Mischbehälter 9, dem pH-geregelt Kalkmilch zugeführt wird und dessen Zuleitung zum Sprühwäscher mit 9' bezeichnet ist.

Das teilweise entfeuchtete und von $SO_2$ befreite Abgas verlässt durch den Schornstein 1o die Anlage.

Der über die Zuleitung 2' in den Desorber 2 gelangte Kondensatteilstrom wird durch das Rauchgas auf etwa 93° C erwärmt, wodurch die $SO_2$-Löslichkeit auf etwa 8.38 kg $SO_2$/m$^3$ $H_2O$ sinkt und dementsprechend etwa 8o kg $SO_2$/h desorbiert werden. Gleichzeitig verdunstet eine Wassermenge von etwa 9O kg $H_2O$/h. Das Gemisch aus $SO_2$ und Wasserdampf wird von einem mit Dünnsaft betriebenen Strahlventilator 11 über die Leitung 12 aus dem Desorber 2 angesaugt und bewirkt die Sulfitation des Dünnsaftes. Dieser wird im Kreislauf über die Umwälzpumpe 13 vom Behälter 14 zum Strahlventilator 11 gefördert; ein Teil davon wird als sulfitierter Dünnsaft zur Verdampfstation abgezogen. Wie aus der Zeichnung erkennbar ist, ist der Behälter 14 ein vom Dünnsaft betriebener Strahlwäscher.

Wie aus der Zeichnung ersichtlich ist, sind der Strahlwäscher 5 und der Sprühwäscher 8 so miteinander vereinigt, dass sich ein durchgehender Kondensatspiegel ergibt. Dadurch entsteht auch im Übergang zwischen diesen beiden Einrichtungen ein Überlauf, der eine bessere Trennung der Festteilchen von der Kondensatflüssigkeit bewirkt. Auch ist der Sprühwäscher 8 als Gegenstromwäscher ausgeführt; die Rauchgase strömen von unten nach oben, während die Sprührichtung der oben liegenden Sprühdüsen nach unten weist.

**Patentansprüche**

1. Verfahren zur Gewinnung von Zucker aus Zuckerrüben mit Ansäuerung von Extraktionswasser und Sulfitation von Dünnsaft unter Nutzung von bei der Gewinnung anfallendem Rauchgas aus schwefelhaltigen Brennstoffen und ammoniakhaltigem Kondensat aus Erwärmungs- und/oder Verdampfungsmassnahmen bei dieser Gewinnung, dadurch gekennzeichnet, dass das $SO_2$-haltige Rauchgas mit dem ammoniakhaltigen Kondensat in Direktkontakt gebracht, das entstehende saure Kondensat durch indirekte Beheizung von Rauchgasen erwärmt, das durch die Erwärmung aus dem sauren Kondensat desorbierende Schwefeldioxid mit dem zu sulfitierenden Dünnsaft in Direktkontakt gebracht und das zurückbleibende saure Kondensat zur Ansäuerung des Extraktionswassers benutzt wird.

2. Verfahren nach Anspruch 1, dadurch gekennzeichnet, dass praktisch das gesamte, im Zusammenwirken mit der Gewinnungsanlage erzeugte Rauchgas mit dem ammoniakhaltigen Kondensat in Berührung gebracht wird.

3. Verfahren nach Anspruch 1, dadurch gekennzeichnet, dass mit dem Abziehen des Kondensats zur Ansäuerung des Extraktionswassers ggfs. anfallendes Sediment abgeführt wird.

4. Vorrichtung zur Durchführung des Verfahrens nach Anspruch 1, dadurch gekennzeichnet, dass zur Kontaktnahme des Rauchgases mit dem ammoniakhaltigen Kondensat ein Sprühwäscher (8) vorgesehen ist, bei dem dessen Düsen durch das ammoniakhaltige Kondensat beschickt sind.

5. Vorrichtung nach Anspruch 4, dadurch gekennzeichnet, dass die Sprührichtung einerseits und die Bewegungsrichtung des Rauchgases andererseits gegensinnig sind.

6. Vorrichtung nach Anspruch 4, dadurch gekennzeichnet, dass dem Sprühwäscher (8) ein vom Rauchgas durchströmter Strahlwäscher (5) vorgeschaltet ist, dessen den Strahl bildende Düsen von im Kreislauf geführtem Kondensat beschickt sind, das dem Sprühwäscher (8) bzw. dem Strahlwäscher (5) entzogen wird.

7. Vorrichtung nach Anspruch 6, dadurch gekennzeichnet, dass der Strahlwäscher (5) und der Sprühwäscher (8) derart miteinander vereinigt sind, dass sich für beide Einrichtungen ein gemeinsamer, durchgehender Kondensatspiegel ergibt.

8. Vorrichtung nach Anspruch 7, dadurch gekennzeichnet, dass der Übergang zwischen den beiden Einrichtungen (5,8) gegenüber dem Grund dieser Einrichtungen erhöht ist.

9. Vorrichtung nach Anspruch 4 und 6, dadurch gekennzeichnet, dass die Eingänge und die Ausgänge des Sprüh- und des Strahlwäschers zum Durchlass praktisch der gesamten, im Zusammenwirken mit der Gewinnungsanlage entstehenden Rauchgasmenge bemessen sind.

**10.** Vorrichtung zur Durchführung des Verfahrens nach Anspruch 1 und 2, dadurch gekennzeichnet, dass die für das Rauchgas bestimmten Leitungen ( Rohre ) zwischen den Sondereinrichtungen (2,3,5,8) der Gewinnungsanlage unverzweigt ausgeführt und sowohl diese Verbindungsleitungen als auch die für das Rauchgas in den Sondereinrichtungen vorgesehenen Durchgangsquerschnitte zum Durchleiten praktisch der gesamten, im Zusammenwirken mit der Gewinnungsanlage entstehenden Rauchgasmenge bemessen und ausgebildet sind.

**11.** Vorrichtung zur Durchführung des Verfahrens nach Anspruch 1, dass die für die Sulfitation des Dünnsaftes dienende Einrichtung ein Strahlwäscher (14) ist, dessen den Strahl bildende Düsen mit Dünnsaft beschickbar sind.

**12.** Vorrichtung nach Anspruch 6, dadurch gekennzeichnet, dass dem Kondensatstrom ein Desorber (2) zum Austreiben von $SO_2$ zugeordnet ist.